# EUROPÄISCHE PATENTSCHRIFT

(11) **EP 0 950 826 B1**
(45) Veröffentlichungstag und Bekanntmachung des Hinweises auf die Patenterteilung: **30.06.2004**
(21) Anmeldenummer: 99105922.1
(22) Anmeldetag: 24.03.1999
(51) Int. Cl.: F16D 13/58, F16D 25/08

(54) **Betätigung für eine axial wirksame Kupplungsdruckplatte sowie dementsprechende Ausrückeeinheit**
Actuator for an axially movable clutch pressure plate, and release assembly incorporating same
Dispositif de commande d'un plateau de pression d'un embrayage, et unité de débrayage comportant le même

(30) Priorität: 17.04.1998 DE 19817171; 22.04.1998 DE 19817838; 03.11.1998 DE 19850552
(43) Veröffentlichungstag der Anmeldung: 20.10.1999
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Rohs, Hans, 52351 Düren (DE); Heidingsfeld, Dietmar, Dipl.-Ing., 52078 Aachen (DE)
(74) Vertreter: Castell, Klaus, Dr.-Ing.

(56) Entgegenhaltungen:
- DE-A- 1 475 412
- DE-A- 19 517 666
- DE-C- 477 017
- DE-C- 879 349
- DE-C- 893 299
- FR-A- 2 753 758
- US-A- 1 913 268
- US-A- 5 033 598

## Beschreibung

Die Erfindung betrifft eine Betätigung für eine axial wirksame Kupplungsdruckplatte mit einer Tellerfeder zum Aufbringen einer im Wesentlichen axial gerichteten Kraft auf die Druckplatte sowie eine Ausrückeeinheit für eine Fahrzeugkupplung mit einer auf eine Druckplatte wirkenden Tellerfeder und mit einem mit der Tellerfeder . wirkverbundenen Zentralausrücker.

Derartige Ausrückeeinheiten für Kupplungsdruckplatten umfassen in der Regel eine zwischen der Kupplungsdruckplatte und einem Kupplungsgehäuse verspannte Tellerfeder, welche die Kupplungsdruckplatte gegen eine Reibscheibe einer Kupplung preßt. Hierbei wird die Tellerfeder durch ein Festlager an dem Kupplungsgehäuse gelagert und mittels radial nach Innen weisender Zungen der Tellerfeder durch ein axial wirksamen Ausrücker ausgerückt.

Wegen der hierbei vorhandenen Hebellängen der Zungen weisen derartige Kupplungen verhältnismäßig große Baulängen auf. Zu dieser durch die Hebel bedingten Baulänge kommt noch hinzu, daß durch einen Belagverschleiß die Tellerfeder eine Winkelbewegung ausführt, die ebenfalls durch die Baulänge der Kupplung vorgehalten werden muß. Darüber hinaus weist die Gesamtanordnung der Kupplung Toleranzen zwischen Kupplungsgehäuse und Zentralausrücker auf, die ebenfalls über die Baulänge aufgefangen werden müssen.

Eine entsprechende Anordnung zeigt beispielsweise auch die DE 195 17 666 A1, wobei in dieser Druckschrift eine Ausrückeeinheit für eine Fahrzeugkupplung mit einer auf die Druckplatte wirkenden Tellerfeder und einem mit der Tellerfeder wirkverbundenen Zentralausrücker offenbart ist, bei welcher der Zentralausrücker selbst über einen radial gerichteten Antrieb verfügt, dessen Antriebskraft in eine axiale Bewegung des Zentralausrückers umgesetzt wird, so dass dieser axial, wie aus dem übrigen Stand der Technik ebenfalls bekannt, auf die Tellerfeder wirkt. Da diese Anordnung jedoch hinsichtlich der Tellerfeder nach dem aus der Stand der Technik bekannten Wirkprinzip baut, können hierdurch die vorbeschriebenen Nachteile nicht beseitigt werden.

Es ist Aufgabe vorliegender Erfindung, eine möglichst schmale Bauweise einer entsprechenden Kupplung zu ermöglichen.

Als erste Lösung schlägt die Erfindung eine Betätigung für eine axial wirksame Kupplungsdruckplatte mit einer Tellerfeder zum Aufbringen einer im Wesentlichen axial gerichteten Kraft auf die Druckplatte vor, bei welcher die Tellerfeder zum Aufbringen der im Wesentlichen axial gerichteten Kraft im Wesentlichen radial von einer Kraft mit einer radialen Komponente angetrieben wird.

Dadurch, daß die Mittel zum Aufbringen der im Wesentlichen axial gerichteten Kraft einen radialen Antrieb umfassen, erfolgt dementsprechend eine radiale Verlagerung der Anordnung, wenn ein derartiger Antrieb erfolgt. Insofern braucht bei der erfindungsgemäßen Anordnung eine axiale Baulänge für diesen Antrieb nicht bereitgestellt zu werden. Es wird darüber hinaus auch dementsprechend weniger Bauraum in axialer Richtung für eine Verschleißnachstellung benötigt. Insbesondere lassen sich auch große Hebel an der Tellerfeder vermeiden, die ebenso zu einer großen Baulänge beitragen.

Die Erfindung kann beispielsweise dadurch umgesetzt werden, daß die Druckplattenbetätigung einen Kraftwandler und einen Kraftgeber umfasst. Hierbei ist der Kraftwandler derart ausgestaltet, daß er eine Kraft mit einer radialen Komponente in eine im Wesentlichen axial gerichtete, auf die Druckplatte aufgebrachte Kraft wandeln kann.

Insbesondere kann der Kraftwandler Bestandteil der Mittel zum Aufbringen der im Wesentlichen axial gerichteten Kraft sein und beispielsweise einen Winkelhebel mit einem im Wesentlichen axial gerichteten Hebelarm und mit einem im Wesentlichen radial gerichteten Hebelarm umfassen. Hierdurch wird eine besonders einfache konstruktive Ausgestaltung des Kraftwandlers sowie eine nur minimale Änderung der ansich bekannten und bewährten Anordnungen nach dem Stand der Technik bedingt, bei welchen der bekannte, axial zu betätigende Hebelarm lediglich durch einen erfindungsgemäßen Winkelhebel ersetzt werden braucht.

Der Kraftgeber realisiert hierbei den radialen Antrieb der Mittel zum Aufbringen der im Wesentlichen axial gerichteten Kraft und ist dementsprechend derart ausgestaltet, daß er mit einer Kraft, die eine radiale Komponente aufweist, auf den Kraftwandler wirken kann.

Der Kraftgeber kann einen im Wesentlichen axial angeordneten Stößel umfassen, der durch einen Zentralausrücker betätigbar ist. Dieses ermöglicht einen verhältnismäßig einfachen konstruktiven Aufbau des Kraftgebers.

In der Regel sind derartige Kupplungsdruckplatten bzw. derartige Kupplungen im Wesentlichen radialsymmetrisch ausgestaltet. Dementsprechend ist es vorteilhaft, wenn auch die Mittel zum Aufbringen der im Wesentlichen axial gerichteten Kraft bzw. der Kraftwandler sowie der Kraftgeber eine entsprechende Symmetrie aufweisen. So kann beispielsweise der Kraftwandler eine Tellerfeder sein, die einen im Wesentlichen radial gerichteten Bereich aufweist, welcher auf die Druckplatte in bekannter Weise eine axial gerichtete Kraft ausübt, und die axial abgewinkelte Bereiche aufweist, durch die ein erfindungsgemäßer, im Wesentlichen radialsymmetrischer Winkelheber realisiert wird. Ebenso kann der Stößel radialsymmetrisch, beispielsweise als Tellerfeder, ausgebildet sein und sich beim Betätigen radial ausdehnen.

Dementsprechend schlägt die Erfindung als zweite Lösung eine Ausrückeeinheit für eine Fahrzeugkupplung mit einer auf eine Druckplatte wirkenden Tellerfeder und mit einem mit der Tellerfeder wirkverbundenen Zentralausrücker vor, bei welchem die Tellerfeder einen in Axialrichtung abgebogenen Bereich aufweist, an welchem ein durch den Zentralausrücker betätigbarer Stößel angreift.

Wie bereits vorstehend angedeutet, kann zwischen der Tellerfeder mit dem in Axialrichtung abgebogenen Bereich und dem Zentralausrücker eine im Wesentlichen radial wirksame Tellerfeder vorgesehen sein. Diese wirkt als Stößel, indem sie radial auf den in Axialrichtung abgebogenen Bereich der auf die Druckplatte wirkenden Tellerfeder wirkt. Insofern dient diese im Wesentlichen radial wirksame Tellerfeder in diesem Falle als Stößel.

Der Zentralausrücker kann einen konischen Bereich aufweisen, an dem der Stößel zumindest im belasteten Zustand anliegt. Diese Anordnung ermöglicht eine radiale Auslenkung, da der Zentralausrücker, wie auch nach dem Stand der Technik bekannt, in axialer Richtung zum Betätigen der Ausrückeeinheit bewegt wird. Hierdurch wird der konische Bereich entsprechend verlagert. Diese Anordnung ermöglicht des Weiteren ein Nachstellen des Stößels, wenn die Kupplung einem Verschleiß unterliegt.

Radialen Asymmetrien des Stößels bzw. bei dem Kraftgeber kann ein Zentralausrücker oder ein ähnlicher Antrieb für die Ausrückeeinheit bzw. die Kupplungsdruckplatten dadurch begegnen, daß zwischen dem Zentralausrücker bzw. dem Antrieb und dem Stößel bzw. dem Kraftgeber eine Baugruppe, die beispielsweise den konischen Bereich umfasst, mit einem radialen Spiel vorgesehen ist. Eine derartige Baugruppe ist auch unabhängig von den übrigen Merkmalen vorteilhaft, solange ein Stößel bzw. ein Kraftgeber durch einen Zentralausrücker bzw. einen Antrieb betätigt werden soll.

Die Ausrückeeinheit kann einen Nachsteller umfassen, der auf den Zentralausrücker zumindest im entlasteten Zustand der Ausrückeeinheit eine Kraft ausübt, so daß der Stößel einer durch Verschleiß bedingten Verlagerung der Tellerfeder folgen kann. Eine derartige Verlagerung folgt aus der Tatsache, daß bei einem Verschleiß die Kupplungsdruckplatte näher an eine Mitnehmerscheibe heranrückt, wodurch die Tellerfeder verlagert wird. Eine derartige Verlagerung ist in der Regel einer Ausrückebewegung der Tellerfeder entgegengerichtet.

Um einer derartigen Verlagerung folgen zu können, benötigt der Stößel somit etwas Raum. Diesen Raum kann der Nachsteller dadurch schaffen, daß er eine Kraft, insbesondere eine axiale Kraft, auf den Zentralausrücker ausübt und diesen auf diese Weise ein wenig von dem Stößel abhebt. Diesen auf diese Weise geschaffenen Raum kann der Stößel nutzen, um einer verschleißbedingten Verlagerung zu folgen.

Ausrückeeinheit und Nachsteller können elastisch miteinander verbunden sein. Hierdurch kann das Verhältnis zwischen der durch den Nachsteller auf den Zentralausrücker aufgebrachten Kraft und der verschleißbedingten Verlagerung in geeigneter Weise in Abhängigkeit gesetzt werden.

Einerseits kann diese elastische Verbindung im Bereich der Tellerfeder vorgesehen sein. Sollte die hierbei durch den Nachsteller aufgebrachte Kraft nicht ausreichend sein, können zwischen dem Nachsteller und dem Stößel weitere bzw. andere elastische Elemente vorgesehen sein, die entsprechende Kraftverhältnisse bedingen.

Der Nachsteller kann beispielsweise mit dem Stößel in der Nähe der Tellerfeder verbunden sein und an einem konischen Nachstellbereich des Zentralbereichs anliegen, wobei der konische Nachstellbereich stumpfer ausgebildet ist, als der konische Bereich des Zentralausrückers. Auf diese Weise ist die durch den Nachrücker ausgeübte axiale Kraft etwas stärker als die durch den Stößel auf den Zentralausrücker ausgeübte Kraft und es wird eine leichte axiale Verschiebung des Zentralausrückers gewährleistet.

Diese leichte Verschiebung reicht aus, daß der Stößel einer verschleißbedingten Verlagerung der Tellerfeder folgen kann.

Andererseits kann der Nachsteller auch unmittelbar an dem konischen Bereich anliegen.

Weitere Vorteile, Ziele und Eigenschaften vorliegender Erfindung werden anhand der Beschreibung vorliegender Zeichnungen verdeutlicht, in welcher beispielhaft eine Betätigung für eine axial wirksame Kupplungsdruckplatte bzw. eine Ausrückeeinheit für eine Fahrzeugkupplung dargestellt sind. In der Zeichnung zeigen:
- Figur 1: eineerfindungsgemäßeKupplungsdruckplattenbetätigungsowie eine erfindungsgemäße Ausrückeeinheit im Schnitt;
- Figur 2: die Anordnung nach Figur 1 in betätigtem Zustand;
- Figur 3: die Anordnung nach Figur 1 bei Verschleiß;
- Figur 4: eine Tellerfeder der Anordnung nach Figur 1 in Aufsicht;
- Figur 5: eine weitere Kupplungdruckplattenbetätigung mit Ausrückeeinheit für eine Fahrzeugkupplung in ähnlicher Darstellung wie in Figur 1;
- Figur 6: eine dritte Kupplungsdruckplattenbetätigung sowie eine weitere Ausrückeeinheit für eine Fahrzeugkupplung in ähnlicher Darstellung wie in Figur 1;
- Figur 7a: die Anordnung nach Figur 6 in betätigtem Zustand;
- Figur 7b: die Anordnung nach Figur 6 bei Verschleiß;
- Figur 8: eine Tellerfeder der Anordnung nach Figur 6; und
- Figur 9: eine bekannte Kupplungsdruckplattenbetätigung.

Die in der Zeichnung dargestellten Anordnungen weisen eine Mitnehmerscheibe 7 auf, die über zwei Reibbeschläge 8 zwischen einem Kupplungsflansch 9 und einer Kupplungdruckplatte 1 eingeklemmt sind. Die hierfür notwendige Vorspannung wird durch eine Tellerfeder 2 aufgebracht, die sich an einem Drehpunkt 3 eines Gehäuses 4 abstützt. Hierbei wirkt die Tellerfeder 2 mit einer im Wesentlichen axial gerichteten Kraft auf die Druckplatte 1.

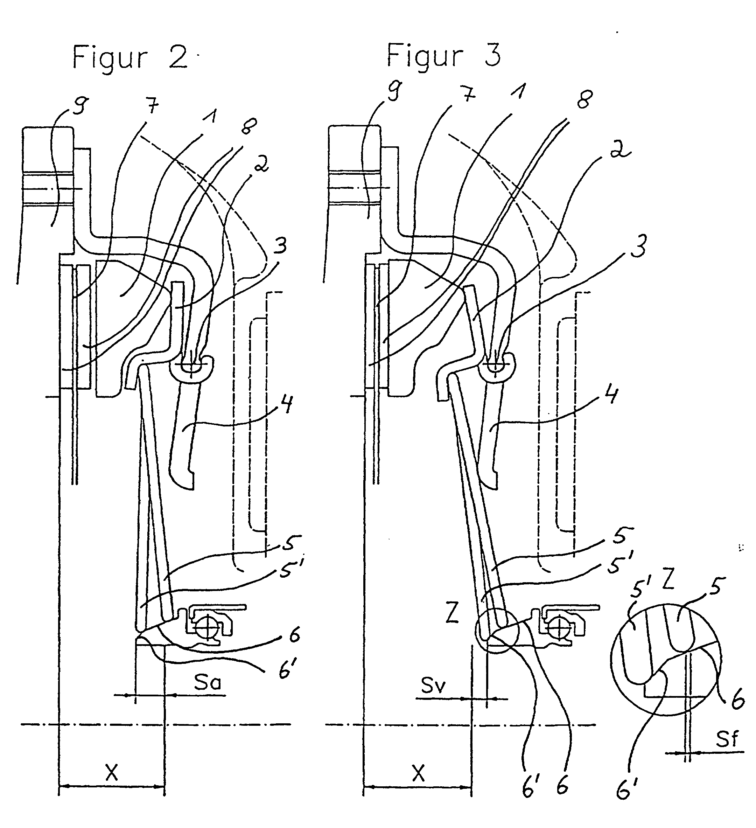

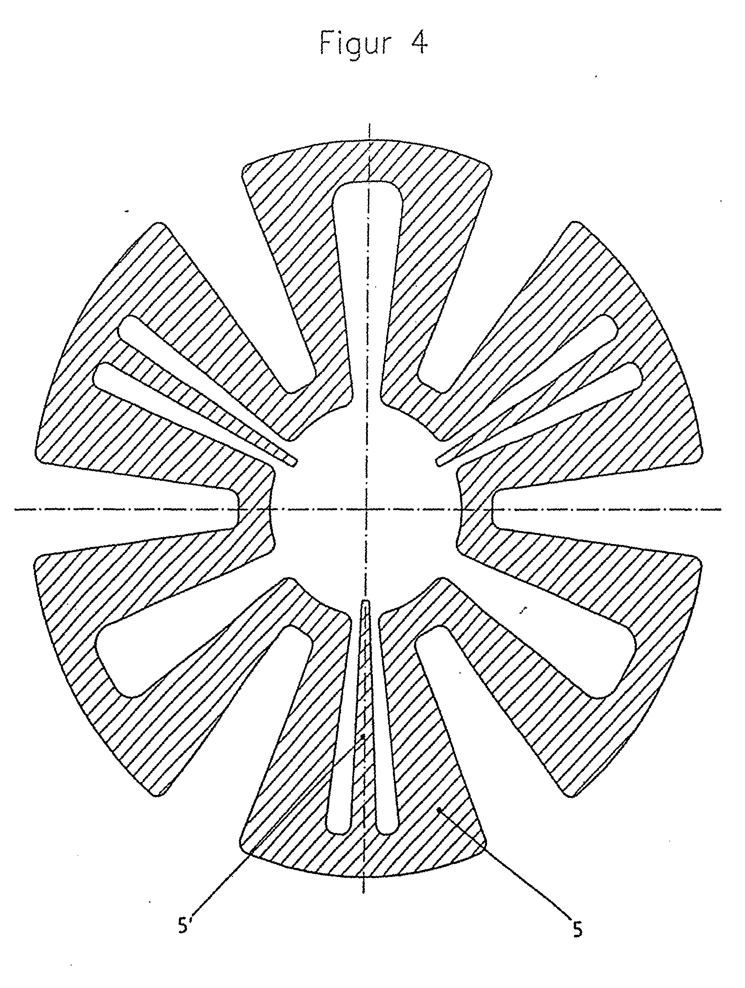

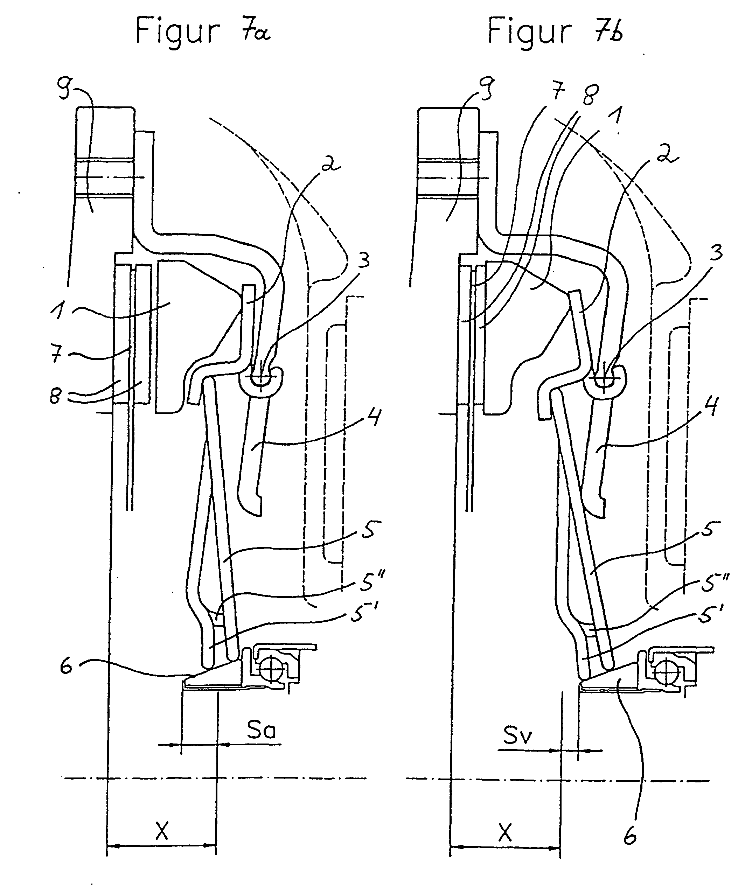

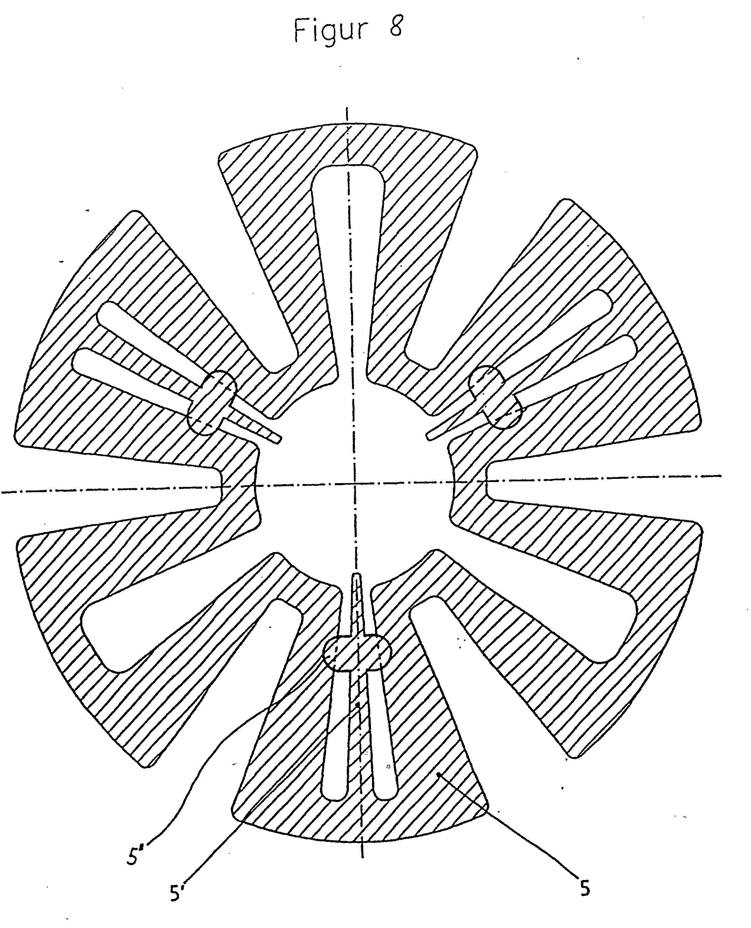

Zum Auskuppeln wird die Tellerfeder 2 ausgerückt, so daß die Klemmspannung zwischen Kupplungsflansch 9 und Druckplatte 1 aufgehoben ist (siehe Figuren 2 und 7a). Ein Ausrücken der Tellerfeder 2 erfolgt durch eine als Stößel dienende Tellerfeder 5 (siehe Figuren 4 und 8), die durch einen Zentralausrücker 10 mit einer radialen Kraft auf einen in axialer Richtung abgebogenen Bereich der Tellerfeder 2 wirkt. Hierbei weist der Zentralausrücker 10 einen konischen Bereich 6 auf, der die Tellerfeder 5 an ihrem Innnenradius axial in Richtung auf die Mitnehmerscheibe 7 um eine Strecke Sa verschiebt, so daß sich der Tellerfederwinkel der Tellerfeder 5 verkleinert und damit die anpressende Tellerfeder 2 ausgelenkt wird.

Die Tellerfeder 2 ist somit als Winkelhebel ausgestaltet, der eine Kraft mit einer radialen Komponente in eine im Wesentlichen axial gerichtete Kraft umwandeln kann.

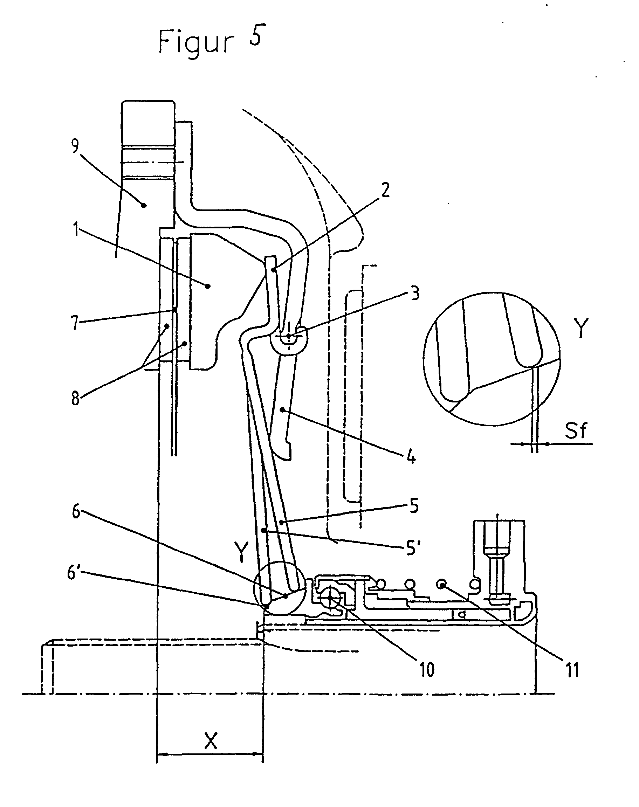

Beim Einkuppeln verspannt sich die Tellerfeder 2 solange, bis die Mitnehmerscheibe 7 wieder zwischen Kupplungsflansch 9 und Druckplatte 1 eingeklemmt ist. Hierbei rückt die Tellerfeder 5 solange aus, bis sie an einer Anlage des Gehäuses 4 anlegt. Die Tellerfeder 5 umfasst des Weiteren Federzungen 5', die den Zentralausrücker 10 um eine kleine Distanz über den zuvor beschriebenen Punkt, bei welchem die Tellerfeder 5 an dem Gehäuse 4 anliegt, herausschiebt, so daß die Tellerfeder 5 an ihrem Innendurchmesser frei ist. Dieses ist durch die Strecke Sf in den Ausschnitten Z in Figur 3 und Y in Figur 5 angedeutet. Auf diese Weise kann die Tellerfeder 2, wenn sie durch Verschleiß bedingt eine größere Winkellage aufweist, die Tellerfeder 5 radial nach Innen zusammendrücken, wobei die Winkellage der Tellerfeder 5 nahezu unverändert bleibt. In diesem Zustand wird der konische Bereich 6 bzw. der Zentralausrücker 10 von der Mitnehmerscheibe 7 weggedrückt, so daß die Tellerfeder 5 auf einem kleineren Durchmesser des konischen Bereichs 6 positioniert wird.

Hierdurch wird erreicht, daß die kräftemäßigen und geometrischen Verhältnisse dieser Anordnung trotz Verschleiß der Kupplung nahezu unverändert bleiben.

Die in den Figuren dargestellten Ausführungsbeispiele unterscheiden sich durch die konkrete Ausgestaltung der Tellerfedern 2 und 5 sowie durch den verwendeten konischen Bereich 6.

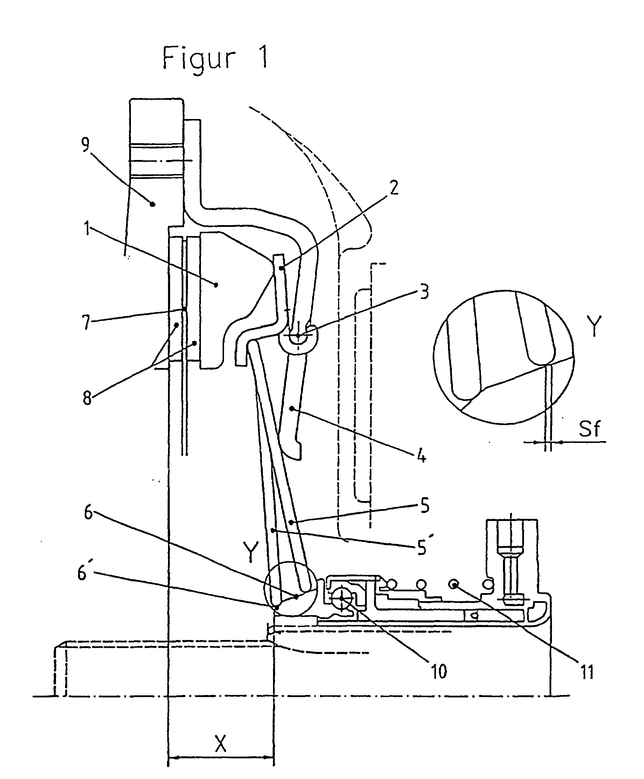

Bei dem in den Figuren 1 bis 4 dargestellten Ausführungsbeispiel liegt ein Nachsteller 5' an einem konischen Nachstellbereich 6' des konischen Bereiches 6 an. Hierbei ist der konische Nachstellbereich 6' stumpfer ausgebildet als der konische Bereich 6, so daß der Nachsteller 5' mit einem günstigerem Kraftverhältnis auf den Zentralausrücker wirken kann. Der Nachsteller 5' ist einstückig mit der als Stößel dienenden Tellerfeder 5 ausgebildet und in der Nähe der Tellerfeder 2 mit der Tellerfeder 5 elastisch verbunden.

Das in Figur 5 dargestellte Ausführungsbeispiel entspricht im wesentlichen dem zuvor Beschriebenen. Allerdings sind bei diesem Ausführungsbeispiel die Tellerfedern 2 und 5 sowie der Nachsteller 5' einstückig ausgeformt. Die als Stößel dienende Tellerfeder 5 liegt somit nicht an einem abgebogenen Bereich der Tellerfeder 2 an, sondern ist mit diesem abgebogenen Bereich über eine Querschnittsverengung mit dem abgewinkelten Bereich verbunden.

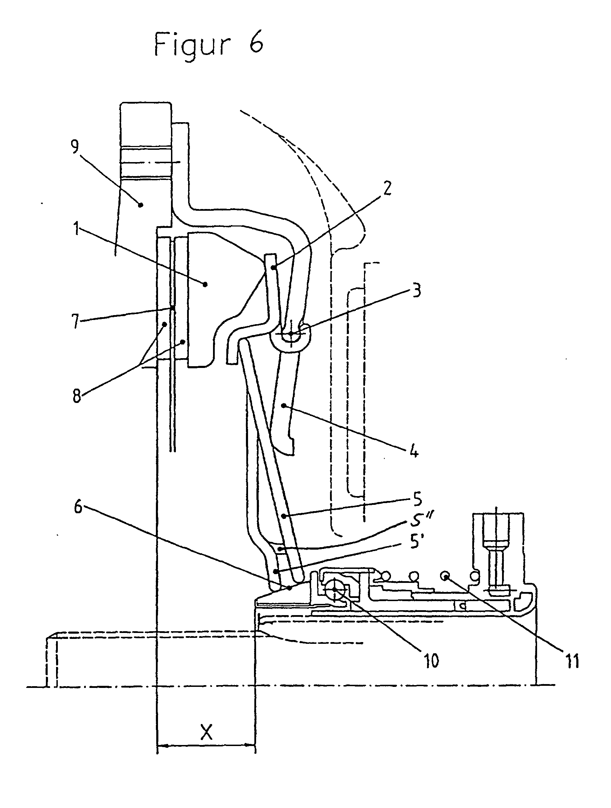

Auch die in Figuren 6 bis 8 dargestellte Ausführungsform entspricht im wesentlichen der in den Figuren 1 bis 4 dargestellten. Bei dieser Ausführungsform liegt jedoch der Nachsteller 5' ebenfalls an dem konischen Bereich 6 an und es ist auf einen konischen Nachstellbereich 6' verzichtet worden. Damit dennoch ausreichend große Kräfte auf den Zentralausrücker aufgebracht werden können und ein entsprechendes Nachstellen erfolgt, weist der Nachsteller 5' in seinem dem Zentralausrücker 10 zugewandten Bereich als Abstandhalter elastische Elemente 5" auf, die den Nachsteller 5' in Richtung auf die Tellerfeder 5 mit einer Kraft beaufschlagen. Der auf diese Weise in Richtung auf die Tellerfeder 5 mit einer Kraft beaufschlagte Nachsteller 5' drückt den Zentralausrücker 10 bzw. den konischen Bereich 6 von der Mitnehmerscheibe 7 weg, so daß die Tellerfeder 5 bzw. der Stößel, wie vorstehend beschrieben, einer Verlagerung der Tellerfeder 2 folgen kann.

Bei dieser Ausführungsform ist der konische Bereich 6 auf einer Hülse 10' angeordnet, die mit einem radialen Spiel auf einer Führung 10" des Zentralausrückers gelagert ist. Hierdurch können radiale Asymmetrien der Tellerfeder 5 bzw. des Nachstellers 5' ausgeglichen werden.

Das Ausrücklager kann an Stelle einer hydraulischen Verstellung auch über einen Hebel angetrieben werden.

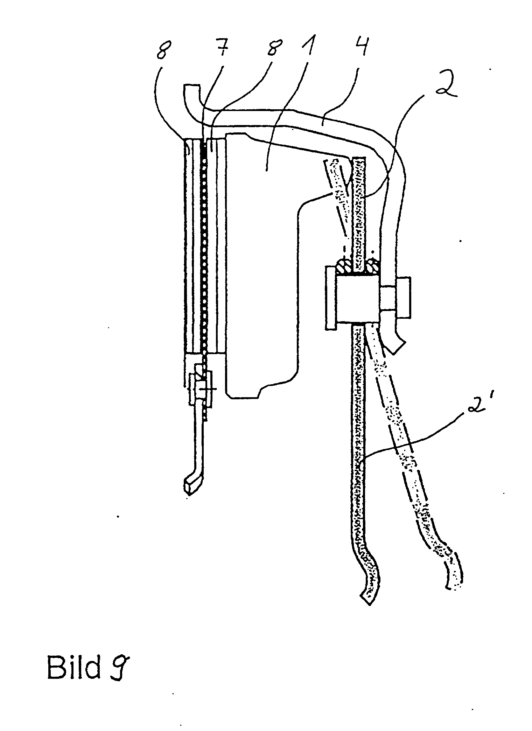

Wie in Figur 9 dargestellt, bedingt der nach dem Stand der Technik vorhandene Hebel 2' der Tellerfeder 2 eine verhältnismäßig große Baulänge der Kupplung, die insbesondere wegen der verschleißbedingten Nachstellung vorgehalten werden muß.

## Patentansprüche

1. Betätigung für eine axial wirksame Kupplungsdruckplatte (1) mit einer Tellerfeder (2) zum Aufbringen einer im Wesentlichen axial gerichteten Kraft auf die Druckplatte(1), ***dadurch gekennzeichnet, daß*** die Tellerfeder (2) derart ausgebildet ist, daß sie zum Aufbringen einer im Wesentlichen axial gerichteten Kraft, entgegen der Kraft auf die Druckplatte (1), im Wesentlichen radial von einer Kraft mit einer radialen Komponente betätigt wird.

2. Druckplattenbetätigung nach Anspruch 1, ***gekennzeichnet durch*** einen Kraftwandler, der eine Kraft mit einer radialen Komponente in eine im wesentlichen axial gerichtete Kraft wandeln kann, und **durch** einen Kraftgeber, der mit einer Kraft mit einer radialen Komponente auf den Kraftwandler wirken kann.

3. Druckplattenbetätigung nach Anspruch 2, ***dadurch gekennzeichnet,daß*** der Kraftwandler einen Winkelhebel mit einem im Wesentlichen axial gerichteten Hebelarm und mit einem im Wesentlichen radial gerichteten Hebelarm umfaßt.

4. Druckplattenbetätigung nach Anspruch 2 oder 3, ***dadurch gekennzeichnet, daß*** der Kraftgeber einen im Wesentlichen radial angeordneten Stößel (5) umfaßt, der durch einen Zentralausrücker (10) betätigbar ist.

5. Ausrückeeinheit für eine Fahrzeugkupplung mit einer Betätigung nach einem der Ansprüche 1 bis 4 und mit einem mit der Tellerfeder (2) wirkverbundenen Zentralausrücker (10), ***dadurch gekennzeichnet, daß*** die Tellerfeder (2) einen in axiale Richtung gebogenen Bereich aufweist, an welchem ein durch den Zentralausrücker (10) betätigbarer Stößel (5) angreift.

6. Aurückeeinheit nach Anspruch 5, ***dadurch gekennzeichnet, daß*** der Tellerfeder und Stößel einstückig ausgebildet sind.

7. Ausrückeeinheit nach Anspruch 5 oder 6, ***dadurch gekennzeichnet, daß*** zwischen der Tellerfeder (2) und dem Zentralausrücker (10) eine im Wesentlichen radial wirksame Tellerfeder (5) vorgesehen ist.

8. Ausrückeeinheit nach Anspruch 7, ***dadurch gekennzeichnet, daß*** der Zentralausrücker (10) einen konischen Bereich (6) aufweist, an dem der Stößel (5) zumindest in belastetem Zustand der Ausrückeeinheit anliegt.

9. Ausrückeeinheit nach Anspruch 8, ***dadurch gekennzeichnet, daß*** der konische Bereich (6) des Zentralausrückers (10) ein radiales Spiel aufweist.

10. Ausrückeeinheit nach Anspruch 8 oder 9, ***gekennzeichnet durch*** wenigstens einen Nachsteller (5'), der auf den Zentralausrücker (10) zumindest im entlasteten Zustand der Ausrückeeinheit eine Kraft ausübt, so daß der Stößel (5) einer **durch** Verschleiß bedingten Verlagerung der Tellerfeder (2) folgen kann.

11. Ausrückeeinheit nach Anspruch 10, ***dadurch gekennzeichnet, daß*** zwischen Stößel (5) und Nachsteller (5') Abstandshalter (5") vorgesehen sind.

12. Ausrückeeinheit nach Anspruch 10 oder 11, ***dadurch gekennzeichnet, daß*** der Nachsteller (5') an dem konischen Bereich (6) anliegt.

13. Ausrückeeinheit nach einem der Ansprüche 10 bis 12, ***dadurch gekennzeichnet, daß*** der Nachsteller (5') und der Stößel (5) elastisch miteinander verbunden sind.

14. Ausrückeeinheit nach einem der Ansprüche 10 bis 13, ***dadurch gekennzeichnet, daß*** der Nachsteller (5') an einem konischen Nachstellbereich (6') des Zentralausrücker (10) anliegt, wobei der konische Nachstellbereich (6') stumpfer ausgebildet ist, als der konische Bereich (6).

## Claims

1. An actuation system for an axially acting clutch thrust plate (1) with a disk spring (2) for applying a substantially axially oriented force onto the thrust plate (1), ***characterized in that*** the disk spring (2) is formed in such a manner that, for applying a substantially axially oriented force, said spring is actuated substantially radially against the force onto the thrust plate (1) by a force having a radial component.

2. The thrust plate actuation system according to claim 1, ***characterized by*** a force converter that is capable of converting a force having a radial component into a substantially axially oriented force and by a force transmitter that is capable of acting onto the converter with a force having a radial component.

3. The thrust plate actuation system according to claim 2, ***characterized in that*** the force converter includes a bell-crank lever having one substantially axially oriented lever arm and one substantially radially oriented lever arm.

4. The thrust plate actuation system according to claim 2 or 3, ***characterized in that*** the force transmitter includes a substantially radially disposed tappet (5) that is actuatable by a central clutch release mechanism (10).

5. A clutch release unit for a vehicle clutch having an actuation system according to one of the claims 1 to 4 and a central clutch release mechanism(10) work connected to the disk spring (2), ***characterized in that*** the disk spring (2) comprises a region that is bent in an axial direction and onto which acts a tappet (5) that is actuatable by the central clutch release mechanism(10).

6. The clutch release unit according to claim 5, ***characterized in that*** the disk spring and the tappet are formed from one piece.

7. The clutch releasing unit according to claim 5 or 6, ***characterized in that*** a substantially radially acting disk spring (5) is provided between the disk spring (2) and the central clutch release mechanism (10).

8. The clutch release unit according to claim 7, ***characterized in that*** the central clutch release mechanism (10) comprises a conical region (6) against which the tappet (5) comes to rest at least in the loaded condition of the clutch release unit.

9. The clutch release unit according to claim 8, ***characterized in that*** the conical region (6) of the central clutch release mechanism (10) comprises a radial clearance.

10. The clutch release unit according to claim 8 or 9, ***characterized by*** at least one adjuster (5') that applies a force onto the central clutch release mechanism(10) at least in the unloaded condition of the clutch release unit, so that the tappet (5) can follow the relocation of the disk spring (2) due to wear.

11. The clutch release unit according to claim 10, ***characterized in that*** spacers (5") are provided between the tappet (5) and the adjuster (5').

12. The clutch release unit according to claim 10 or 11, ***characterized in that*** the adjuster (5') fits against the conical region (6)

13. The clutch release unit according to one of the claims 10 to 12, ***characterized in that*** the adjuster (5') and the tappet (5) are connected elastically.

14. The clutch release unit according to one of the claims 10 to 13, ***characterized in that*** the adjuster (5') fits against a conical adjusting region (6') of the central clutch release mechanism(10), the conical adjusting region (6') having a more truncated form than the conical region (6).

## Revendications

1. Commande pour un plateau de pression (1) pour embrayage à action axiale avec un ressort à diaphragme (2) pour l'application d'une force sensiblement orientée axialement sur le plateau de pression (1), ***caractérisé en ce que*** le ressort à diaphragme (2) est formé de telle façon que, pour appliquer une force orientée sensiblement axialement, il est actionné sensiblement radialement, à l'encontre de la force exercée sur le plateau dé pression (1), par une force ayant une composante radiale.

2. Commande pour un plateau de pression selon la revendication 1, ***caractérisé par*** un transducteur de forcé capable de convertir une force ayant une composante radiale en une force orientée sensiblement axialement et par un capteur de force capable d'agir sur le transducteur de force par une force ayant une composante radiale.

3. Commande plateau dé pression selon la revendication 2, ***caractérisé en ce que*** le transducteur de force comprend un levier coudé ayant un bras de levier orienté sensiblement axialement et un bras de levier orienté sensiblement radialement.

4. Commande plateau de pression selon la revendication 2 ou 3, ***caractérisé en ce que*** le capteur de force comprend un poussoir (5) qui est disposé sensiblement radialement et qui est susceptible d'être actionné par un débrayeur central (10).

5. Mécanisme de débrayage pour un embrayage de véhicule avec une commande selon l'une quelconque des revendications 1 à 4 et avec un débrayeur central (10) agissant conjointement avec le ressort à diaphragme (2), ***caractérisé en ce que*** le ressort à diaphragme (2) comporte une zone courbée dans la direction axiale sur laquelle agit un poussoir (5) susceptible d'être actionné par le débrayeur central (10).

6. Mécanisme de débrayage selon la revendication 5, ***caractérisé en ce que*** le ressort à diaphragme et le poussoir ne constituent qu'une seule et même pièce.

7. Mécanisme de débrayage selon la revendication 5 ou 6, ***caractérisé en ce qu'***entre le ressort à diaphragme (2) et le débrayeur central (10) est prévu un ressort à diaphragme (5) à action sensiblement radiale.

8. Mécanisme de débrayage selon la revendication 7, ***caractérisé en ce que*** le débrayeur central (10) comporte une zone conique (6) sur laquelle le poussoir (5) est en appui du moins lorsque le mécanisme de débrayage est sollicité.

9. Mécanisme de débrayage selon la revendication 8, ***caractérisé en ce que*** la zone conique (6) du débrayeur central (10) présente un jeu radial.

10. Mécanisme de débrayage selon la revendication 8 ou 9, ***caractérisé par*** au moins un organe de réglage (5') qui exerce une force sur le débrayeur central (10) du moins lorsque le mécanisme de débrayage n'est pas sollicité pour que le poussoir (5) puisse suivre le ressort à diaphragme (2) dans son déplacement dû à l'usure.

11. Mécanisme de débrayage selon la revendication 10, ***caractérisé en ce que*** des entretoises (5") sont prévues entre le poussoir (5) et l'organe de réglage (5').

12. Mécanisme de débrayage selon la revendication 10 ou 11, ***caractérisé en ce que*** l'organe de réglage (5') est en appui contre la zone conique (6).

13. Mécanisme de débrayage selon l'une quelconque des revendication 10 à 12, ***caractérisé en ce que*** l'organe de réglage (5') et le poussoir (5) sont reliés élastiquement.

14. Mécanisme de débrayage selon l'une quelconque des revendication 10 à 13, ***caractérisé en ce que*** l'organe de réglage (5') est en appui contre une zone de réglage conique (6') du débrayeur central (10), ladite zone de réglage conique (6') étant plus tronquée que la zone conique (6).
